Europäisches Patentamt

European Patent Office

Office européen des brevets

(19)

(11) EP 0 872 727 A1

(12) **EUROPÄISCHE PATENTANMELDUNG**

(43) Veröffentlichungstag:
21.10.1998 Patentblatt 1998/43

(51) Int Cl.6: G01N 27/04

(21) Anmeldenummer: 98250134.8

(22) Anmeldetag: 17.04.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 18.04.1997 DE 19717711

(71) Anmelder: Umsicht Institut für Umwelt- und
Sicherheitstechnik e.V.
46047 Oberhausen (DE)

(72) Erfinder:
• Guderian, Joachim, Dr.-Ing.
44579 Castrop-Rauxel (DE)
• Seifert, Ulrich, Dipl.-Ing.
45239 Essen (DE)
• Heil, Volker, Dipl.-Ing.
44147 Dortmund (DE)

(74) Vertreter: Pfenning, Meinig & Partner
Kurfürstendamm 170
10707 Berlin (DE)

(54) **Vorrichtung und Verfahren zur on-line Feuchtemessung für Schüttgüter**

(57) Es wird eine Vorrichtung und ein Verfahren zur on-line-Feuchtemessung für Schüttgüter vorgestellt. Die erfindungsgemäße Vorrichtung weist mindestens zwei Elektroden (2) auf, die in einem Abstand zueinander angeordnet und in das Schüttgut eingebracht werden. Der Raum zwischen den Elektroden wird mit Schüttgut aufgefüllt und die elektrische Leitfähigkeit bzw. der elektrische Leitwert des Schüttgutes zwischen den Elektroden und aus diesen der statische bzw. dynamische Flüssigkeitsgehalt des Schüttgutes ermittelt. Bei geeigneter Ausführung und Anordnung von Elektroden aufweisenden Meßzellen kann zudem die lokale Richtung einer Flüssigkeitsströmung innerhalb der Schüttung ermittelt werden.

Fig.1

EP 0 872 727 A1

**Beschreibung**

Die Erfindung betrifft eine Vorrichtung und ein Verfahren zur Messung der lokalen Feuchtigkeit in Schüttgütern.

Es wird zwischen direkten und indirekten Meßverfahren bei der Feuchtemessung in Feststoffschüttungen unterschieden. Während direkte Verfahren die Flüssigkeit vom Feststoff trennen und quantitativ bestimmen, messen indirekte Verfahren primär nicht die Feuchte, sondern eine mit der Feuchte korrelierte physikalische Kenngröße des Stoffes. Die direkten Verfahren Wäge-Trocknung und Karl-Fischer-Titration sind sehr aufwendig und nicht für on-line-Messungen geeignet.

Zu den technisch bedeutsamen indirekten Feuchtemeßverfahren gehören radiometrische (Neutronenmessung) und optische Verfahren (Infrarotmessung, Mikrowellenverfahren). Das Mikrowellenverfahren und die Infrarotspektroskopie erlauben die berührungslose Feuchtemessung an bewegten Objekten und werden deshalb bevorzugt in Produktionsprozessen eingesetzt. Diese Meßverfahren sind allerdings nicht zur lokalen Feuchtebestimmung in einer Feststoffschüttung geeignet. Die Neutronenmessung wird bevorzugt zur Feuchtemessung in Böden eingesetzt. Das Verfahren mittelt die Feuchte über ein relativ großes nicht genau definierbares Volumen und ist damit ebenfalls nicht zur lokalen Feuchtemessung in Feststoffschüttungen geeignet.

Bei Trocknungsprozessen wird häufig die Luftfeuchte in den Hohlräumen gemessen. Bei Kenntnis der Sorptionsisotherme kann auf die Feuchte des Meßgutes geschlossen werden. Dieses Meßprinzip ist allerdings nur für statische Systeme geeignet.

Aufgabe der vorliegenden Erfindung ist es, eine Vorrichtung und ein Verfahren sowie eine Meßzelle zu schaffen, die eine einfache, kostengünstige und zuverlässige lokale on-line-Feuchtemessung, d.h. Bestimmung des Feuchtigkeitsgrades und/oder des Feuchtigkeitsinhalts, in Schüttgütern ermöglichen. Die Messung des dynamischen und statischen Flüssigkeits-Holdups soll ebenfalls möglich sein.

Diese Aufgabe wird durch die erfindungsgemäße Vorrichtung und das Meßverfahren wie im folgenden beschrieben bzw. gemäß den Ansprüchen 1 und 10 gelöst. Die meßtechnische Definition der Leitfähigkeit baut dabei auf Messung des elektrischen Widerstandes bzw. des Leitwertes auf.

Die Meßvorrichtung und das Meßverfahren zeichnen sich durch einen einfachen technischen Aufbau aus und sind zudem kostengünstig. Es können sowohl der statische Flüssigkeits-Holdup als auch der dynamische Flüssigkeits-Holdup (Menge an Flüssigkeit pro Volumen, die in einem fließenden System gespeichert wird) in einem großen Meßbereich gemessen werden. Durch Einbringen einer Vielzahl von Meßzellen kann die Verteilung der lokalen Flüssigkeitsinhalte bestimmt werden.

Vorteilhafte Weiterbildungen der erfindungsgemäßen Meßzellen und des erfindungsgemäßen Verfahrens werden in den abhängigen Ansprüchen gegeben.

Besonders vorteilhaft ist, daß durch Anordnung von mindestens zwei Elektrodenpaaren, die unter einem Winkel gegeneinander versetzt sind, die Strömungsrichtung in mehrphasig durchströmten Schüttgütern ermittelt werden kann.

Ausführungsbeispiele der Erfindung sind in der Zeichnung dargestellt und werden in der nachfolgenden Beschreibung näher erläutert. Es zeigen:

Fig. 1          einen Aufbau eines Ausführungsbeispiels der erfindungsgemäßen Meßvorrichtung,

Fig. 2          einen Schaltungsaufbau einer Meßeinrichtung des Leitwertes von in Schüttungen eingebrachten Meßzellen,

Fig. 3          ein Beispiel einer erfindungsgemäßen Meßzelle in Einbaulage,

Fign. 4 und 5   eine schematische Darstellung der Anordnung von zwei Meßzellen in der Schüttung zur Bestimmung der Strömungsrichtung, und

Fign. 6 und 7   eine schematische Darstellung der Anordnung von zwei Elektrodenpaaren, die zu einer Meßzelle zusammengeschaltet sind, in der Schüttung zur Bestimmung der Strömungrichtung.

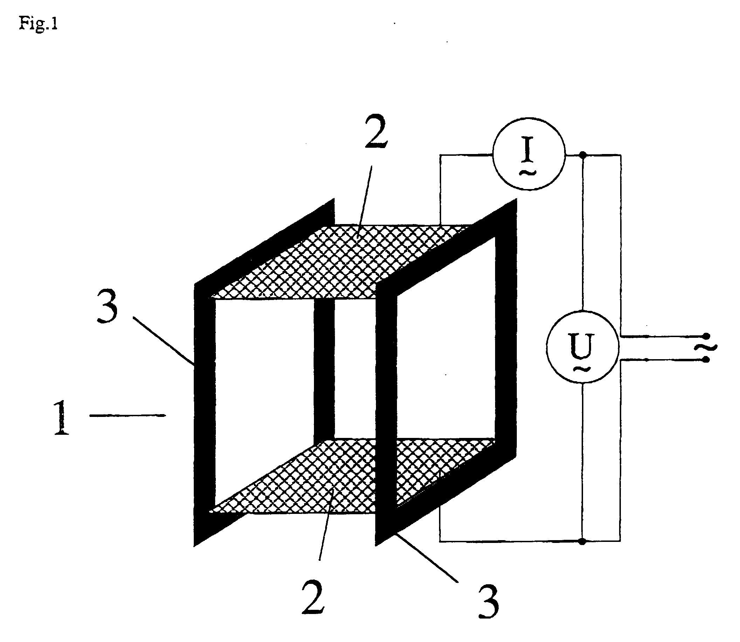

In Fig. 1 ist beispielhaft der Aufbau einer Vorrichtung zur Messung der Feuchtigkeit in Schüttgütern mit einer Meßzelle 1 dargestellt, wobei es sich beispielsweise um Feststoffschüttungen handelt, die von einer leitfähigen Flüssigkeit durchströmt werden.

Zwei Elektroden 2 aus perforierten oder unperforierten Platten, Streifen oder Geweben werden mit Abstandhaltern 3 (z.B. Rahmen) fixiert. Die Elektroden 2 bestehen wahlweise aus Metall oder anderen elektrisch leitfähigen Materialien (z.B. elektrisch leitendem Kunststoff). Durch geeignete Wahl des Elektrodenmaterials können katalytische Effekte verhindert werden. Für die Abstandhalter 3 kommt nichtleitendes Material oder leitendes Material, das isoliert ist, in Betracht.

Die beiden Elektroden 2 sind mit einer Meßvorrichtung 4 zur Bestimmung des Leitwertes verbunden, die durch die Strom-/Spannungsmeßeinheiten angedeutet ist.

Zwischen beiden Elektroden 2 wird eine hinreichend hochfrequente Wechselspannung angelegt und Strom I sowie Spannung U in diesem Stromkreis gemessen. Über die Beziehung $U = ZI$ (Ohmsches Gesetz) kann der Widerstand Z und aus $G = 1/Z$ der Leitwert G der Anordnung bestimmt werden.

Dieser Leitwert stellt einen zusammengesetzten Parameter dar, der bei gegebener Geometrie und Strömungsrichtung im wesentlichen folgende Einflußgrößen beinhaltet:

- die Leitfähigkeit der durchströmten Schüttung im Inneren der Zelle,
- den Beitrag des umgebenden Raumes zum Leitwert und
- Übergangswiderstände zwischen Netzelektrode und durchströmter Schüttung.

Daneben treten Widerstände innerhalb der Elektroden und ihrer Kabelanschlüsse auf; sie sind jedoch vernachlässigbar klein.

Werden die Übergangswiderstände zwischen Netzelektrode und durchströmter Schüttung konstruktiv klein gehalten und der Beitrag des umgebenden Raumes zum Leitwert durch Isolation leitender Behälterwände etc. auf die Leitung innerhalb der umgebenden Schüttung reduziert, so verbleibt als Haupteinflußgröße des Meßzellenleitwertes die lokale Leitfähigkeit der Schüttung, gemittelt über die Grenzen der Meßzelle und ihre unmittelbare Umgebung.

Vorteilhaft für die aus der Messung zu gewinnenden Aussagen sind jedoch neben einer sorgfältigen Auswahl der Grundform auch die Auswahl der geometrischen Abmessungen der Zellen. Einerseits sind eine möglichst große Elektrodenfläche und ein möglichst großer Elektrodenabstand anzustreben, da hierdurch die Störung von Schüttungsstruktur und Strömungsverhalten durch die Meßzelle relativ zum Meßvolumen sinkt. Andererseits sind möglichst kleine Abmessungen in Betracht zu ziehen, um lokale Effekte erfassen zu können. Vorzugsweise sind die Elektroden planparallel und flächig ausgebildet, wobei jedoch auch gewölbte Flächen oder Flächen anderer Formen denkbar sind.

Auch ist möglich, daß die Elektroden in die Schüttung mit einem bestimmbaren Abstand, aber ohne Abstandshalter eingesetzt sind oder zum Beispiel an der Behälterwand befestigt sind. Bei Elektroden, die ohne Abstandshalter oder Befestigung in die Schüttung eingesetzt sind, kann sich der Abstand über die Zeit ändern. In diesem Fall müßten Nachkalibrierungen vorgenommen werden. In allen Fällen wird der Raum zwischen den Elektroden mit der Schüttung aufgefüllt, wobei auch ein Schichtverfahren Elektrode-Schüttung-Elektrode angewandt werden kann.

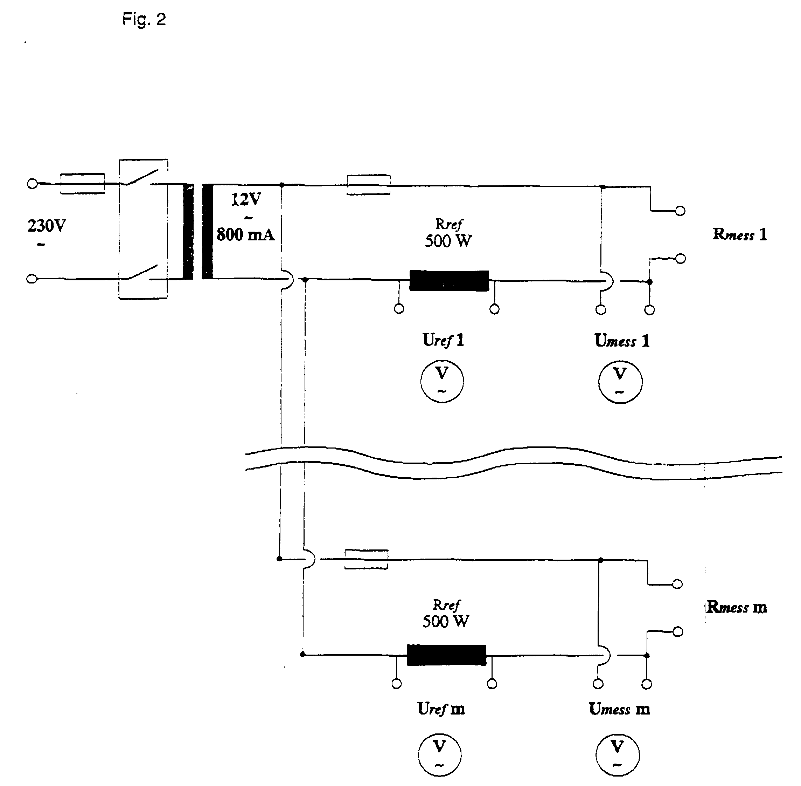

Eine beispielhafte elektrische Verschaltung der Meßzellen geht aus Fig. 2 hervor, die zur Messung des Leitwertes von m in die Schüttung eingebrachter Meßzellen dient.

Jede Meßzelle befindet sich in einer Reihenschaltung mit einem Präzisionswiderstand, der als Referenzwiderstand $R_{ref}$ fungiert. An der Meßzelle und dem Referenzwiderstand werden die Wechselspannungen $U_{mess}$ und $U_{ref}$ abgegriffen. Der Leitwert $G_{mess}$ der

Meßzelle errechnet sich dann zu:

$$G_{mess} = \frac{1}{R_{mess}} = \frac{U_{ref}}{R_{ref} \cdot U_{mess}} \qquad [1].$$

Der Leitwert stellt ein Maß für den Flüssigkeitsgehalt der Schüttung dar. In der nicht berieselten Schüttung kann auf diese Weise ein Maß für den statischen Flüssigkeits-Holdup (Holdup = Feuchtigkeitsinhalt) und in der berieselten Schüttung eines für den gesamten (statischen und dynamischen) Flüssigkeits-Holdup abgeleitet werden. Um den Leitwert-Meßsignalen Feuchtigkeitswerte zuzuordnen, sind Kalibrierungsversuche erforderlich.

Durch die Wahl der Größe des Referenzwiderstandes kann die Funktion der Meßzelle beeinflußt werden. Während ein kleiner Referenzwiderstand eine bessere Auflösung hinsichtlich der Feuchtemessung ermöglicht, gewährleistet ein höherer Referenzwiderstand eine geringere Wärmeentwicklung durch die Meßzellen. Dieser Zusammenhang ist insbesondere bei temperaturempfindlichen Stoffsystemen zu beachten.

Die Meßzellen werden derart in die Schüttung eingebracht, daß der Raum zwischen den Elektroden möglichst in gleicher Weise wie die Umgebung mit Feststoffschüttung angefüllt ist und die Schüttung über und unter beiden Elektroden gleichmäßig anliegt. Es ist bei reinen Feuchte- bzw. Holdupmessungen zu beachten, daß bei einer berieselten bzw. einer gasdurchströmten Schüttung die Strömungsrichtung vorzugsweise senkrecht zur Elektrodenfläche angeordnet ist. Damit ist gewährleistet, daß die Flüssigkeits- bzw. Gasströmung nur geringfügig von den Meßzellen beeinflußt werden. Bei der Durchströmung durch die Schüttung werden Kanäle gebildet, die zum Beispiel Flüssigkeitsbrücken darstellen. Bei einer Anordnung senkrecht zur Strömungsrichtung können "Kurzschlüsse" durch Flüssigkeitsbrücken erfaßt werden. Durch die Anordnung von mehreren Meßzellen in einer Feststoffschüttung ist es möglich, die räumliche Verteilung des Flüssigkeits-Holdups zu erfassen.

Mit Hilfe der Meßzellen kann neben der Feuchtigkeit auch die Strömungsrichtung einer flüssigen Phase in einer Feststoffschüttung erfaßt werden. Dies kann zum einen durch eine geeignete Anordnung und durch die unterschiedliche räumliche Ausrichtung der einzelnen Meßzellen in der Schüttung erreicht werden, wobei darunter jede Anordnung zu verstehen ist, bei der die Flächen der Elektroden von unterschiedlichen Meßzellen nicht in einer gleichen bzw. parallelen Ebene liegen. Zum anderen besteht die Möglichkeit, mehr als zwei Seiten der Meßzellen mit Elektroden auszustatten. Dann ist es möglich, über die simultane oder quasisimultane Messung der Leitwerte zwischen unterschiedlichen Elektrodenpaaren die Strömungsrichtung lokal zu ermitteln. Dies geschieht beispielsweise unter Heranziehung von Kalibrierkurven, die die Abhängigkeit der Leitwerte vom Anströmwinkel vorgeben. Bei nicht bekanntem Einbringungswinkel $\alpha$ der Meßzellen müssen zusätzliche Kalibriermessungen vorgenommen werden.

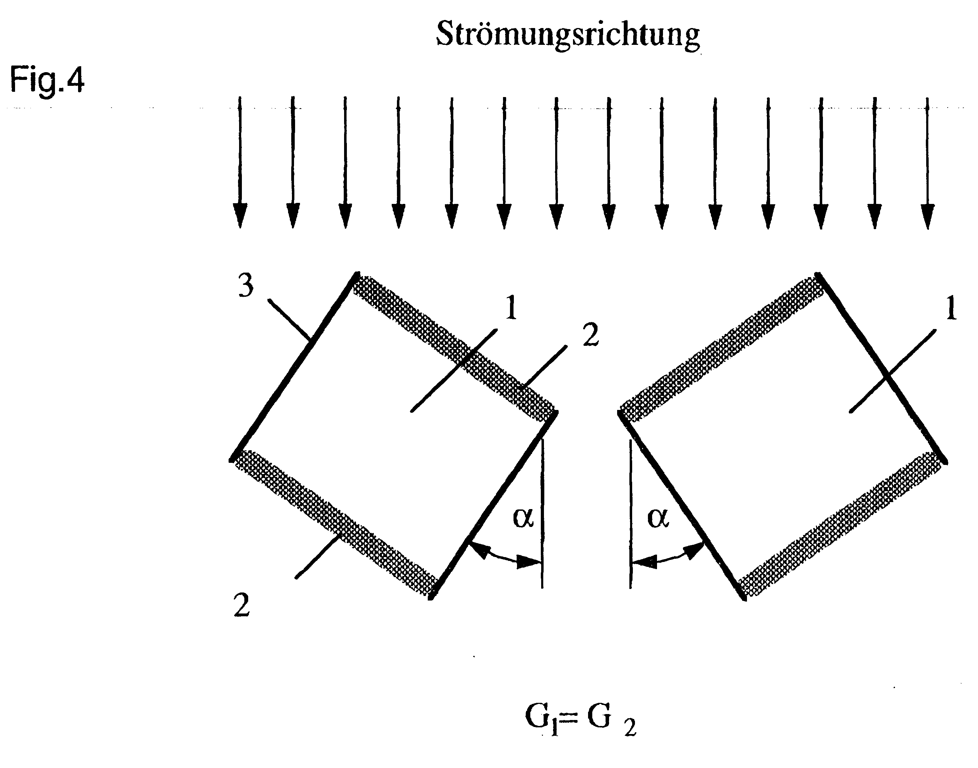

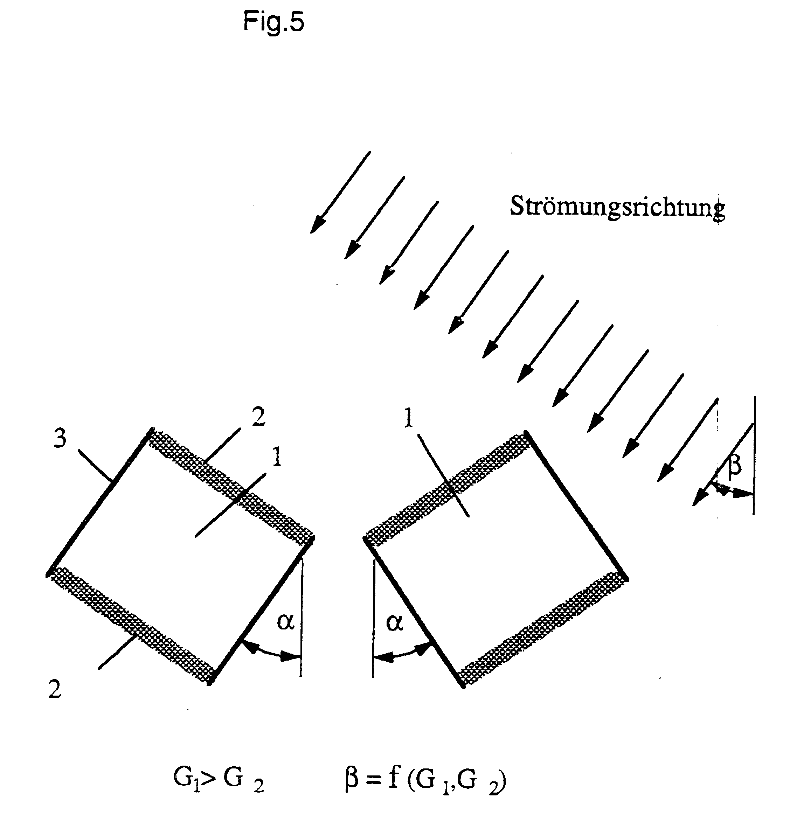

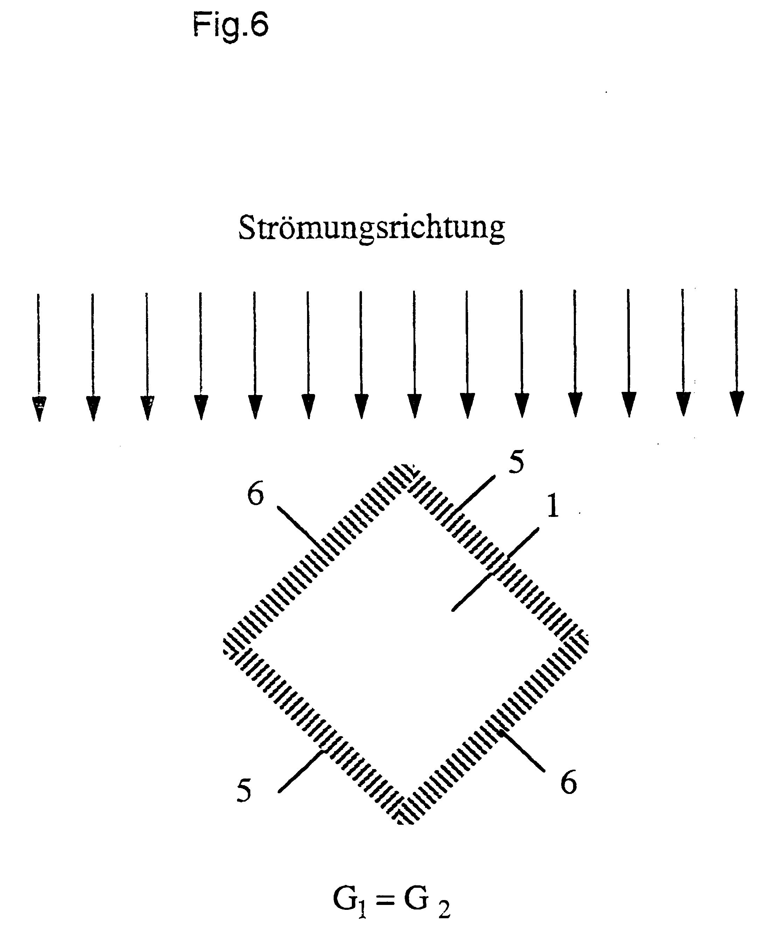

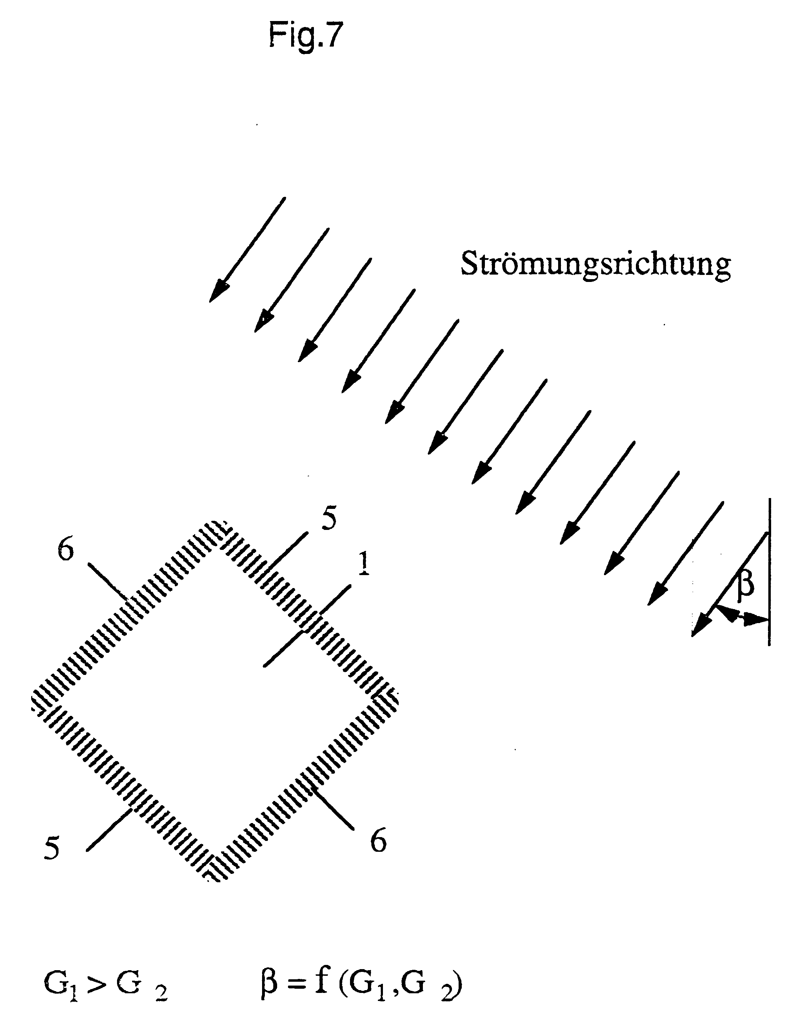

Als Ausführungsbeispiel für die Messung der Strömungsrichtung durch zwei geeignet angeordnete Meßzellen dienen Fign. 4 und 5 (beispielhaft für den zweidimensionalen Fall). Hier wird verdeutlicht, daß sich die Anströmungsrichtung aus den Leitwerten $G_1$ und $G_2$ zweier gegeneinander geneigter Meßzellen errechnen läßt, wobei sich der Anströmwinkel $\beta$ als Funktion aus $G_1$ und $G_2$ ergibt, da sich quer und längs zur Strömungsrichtung unterschiedliche Leitwerte in der Schüttung ergeben. In den Fign. 6 und 7 wird dieses entsprechend für eine Meßzelle dargestellt, die mehr als zwei Elektrodenpaare 5, 6 aufweist und damit die Messung zweier Einzelzellen auf eine integrierte Einzelmeßzelle vereint.

In ähnlicher Weise können die in den Figuren 4 und 5 gezeigten Meßzellen so angeordnet werden, daß jeweils eine ihrer Elektroden elektrisch leitend miteinander verbunden sind, beispielsweise indem zwei Elektrodenflächen, gegeneinander abgewinkelt, mit einer ihrer Seiten aneinanderstoßen. Dadurch ergibt sich unter elektrischen Gesichtspunkten eine Meßzelle mit 3 Elektroden.

Für die Kalibrierung der in die Schüttung eingebrachten Meßzellen wird vor dem eigentlichen Betrieb eine Referenzmessung durchgeführt, zum Beispiel, indem die durchströmte Flüssigkeit über eine Referenzmeßzelle gegeben wird, und es werden die entsprechenden Kalibrierkurven bestimmt. Im Betrieb werden dann die Kalibrierkurven zur Auswertung der Feuchtigkeit herangezogen, wobei gegebenenfalls bei Änderung der Parameter zum Beispiel Temperatur, Leitwertänderung der Flüssigkeit usw. nachkalibriert werden muß. Dies kann durch mathematische Berechnung erfolgen.

Das mathematische Verfahren zur Berechnung der lokalen Feuchte kann jedoch erheblich vereinfacht werden, wenn bei der flüssigkeitsberieselten Schüttung die Leitwertbestimmung der abtropfenden Flüssigkeit ständig während des Betriebes durchgeführt wird.

Wird die Flüssigkeit nach Durchströmen der Schüttung durch die Referenzmeßzelle geleitet und deren Leitwert on-line ermittelt, so wird eine Referenzdatenkurve erhalten. Durch Vergleich der Leitwerte der Meßzellen in der Schüttung mit den jeweiligen Referenzdaten kann ständig nachkalibriert werden.

Ist die Flüssigkeitsbelastung zu gering, um dieses relativ einfache Verfahren anwenden zu können, muß auf eine andere Methodik zurückgegriffen werden. Zur Ermittlung der lokalen Feuchte einer flüssigkeitsberieselten Schüttung sind zunächst Analysen vorzugsweise im Labormaßstab durchzuführen, bei denen neben der Feuchte bzw. der Flüssigkeitsberieselungsdichte auch andere relevante Größen wie die Systemtemperatur und die Standzeit der Meßsonde in einer dem technischen Anwendungsfall vergleichbaren Schüttung variiert werden. Dazu werden Leitwerte bei verschiedenen Bedingungen ermittelt, und es wird mit diskontinuierlichen Analyseverfahren der Wassergehalt der Schüttung bestimmt. Durch diese Kalibrierungsmessungen erhält man ein mehrdimensionales Kennlinienfeld, mit dessen Hilfe sich aus dem gemessenen Leitwert und den ebenfalls ermittelten physikalisch-chemischen Randbedingungen die lokale Feuchte errechnen läßt. Hierbei sind jedoch individuelle Apparatekonstanten der einzelnen Meßzellen zu berücksichtigen.

Die jeweils gültigen mathematisch-physikalischen Abhängigkeiten sind systemspezifisch und lassen sich daher nicht für den allgemeinen Fall angeben.

Die Meßeinrichtung zur Messung des Leitwertes zwischen den Elektroden bzw. des Stroms und der Spannung zwischen ihnen ist mit einer Auswerteeinheit verbunden, die zum Beispiel ein PC ist und in der die notwendigen Kalibrier- und Referenzkurven bzw. -daten gespeichert sind, so daß sie schnell und zuverlässig zur Auswertung des Feuchtegehaltes bzw. der Strömungsrichtung herangezogen werden können.

Im folgenden wird ein Ausführungsbeispiel einer bei der erfindungsgemäßen Vorrichtung verwendeten Meßzelle gegeben.

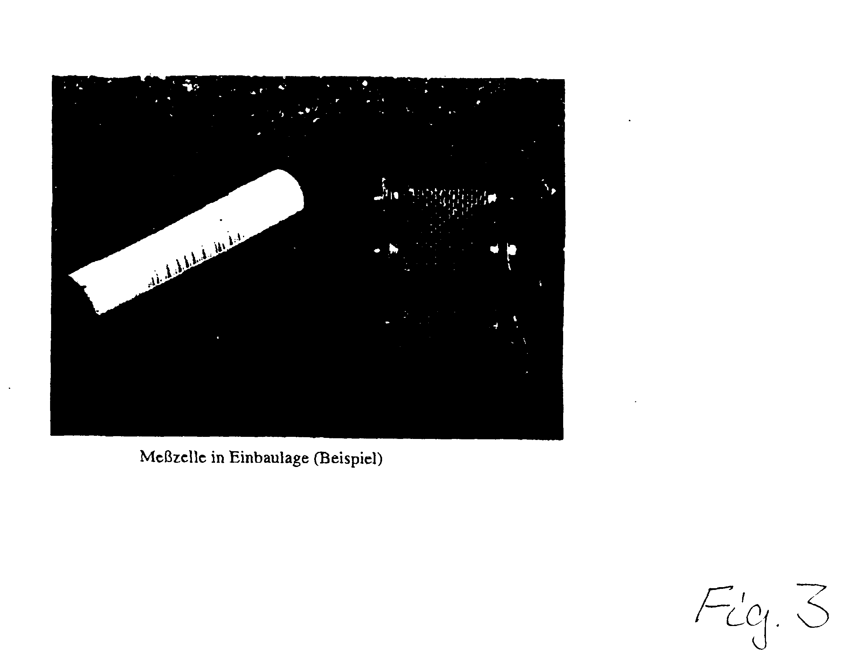

Die Meßzellen aus Fig. 1 wurden zur lokalen Feuchtigkeitsbestimmung in einer wasserberieselten Koksschüttung eingesetzt. Die ausgeführten Meßzellen weisen eine quadratische Grundfläche mit 30 mm Kantenlänge auf und sind im Abstand von 30 mm voneinander angeordnet. Sie bestehen aus Kupferdrahtmaschengewebe mit einer Drahtstärke von 0,3 mm und einer Maschenweite von 1 mm. Die Trägerrahmen sind aus 2 mm starkem PVC gefertigt; ihre Seitenstreben weisen eine Breite von ebenfalls 2 mm auf. Fig. 3 zeigt eine solche Meßzelle in Einbaulage auf der Koksschüttung; der ebenfalls abgebildete Filzschreiber dient als Größenvergleich. Die Meßzellen wurden entsprechend Fig. 2 verschaltet.

## Patentansprüche

1.  Vorrichtung zur Bestimmung der lokalen Feuchtigkeit in Schüttgütern,
    **dadurch gekennzeichnet**,

    daß mindestens zwei Elektroden (2) mit Abstand zueinander in die Schüttung eingebracht sind und mit einer Meßeinrichtung zur Messung des Leitwertes verbunden sind, wobei der gemessene Leitwert ein Maß für die Feuchtigkeit ist.

2.  Vorrichtung nach Anspruch 1, dadurch gekennzeichnet, daß die Elektroden (2) einen festen vorbestimmten Abstand zueinander aufweisen.

3.  Vorrichtung nach Anspruch 2, dadurch gekennzeichnet, daß die Elektroden (2) Bestandteil einer Meßzelle sind, bei der mindestens zwei Elektroden an mindestens einem Abstandshalter angeordnet sind.

4. Vorrichtung nach Anspruch 1, dadurch gekennzeichnet, daß die Elektroden (2) flächig ausgebildet sind.

5. Vorrichtung nach mindestens einem der Ansprüche 1 bis 4, dadurch gekennzeichnet, daß die Elektroden (2) als im wesentlichen planare Flächen ausgebildet und im wesentlichen paarweise parallel zueinander angeordnet sind.

6. Vorrichtung nach einem der Ansprüche 1 bis 5, dadurch gekennzeichnet, daß mindestens zwei Paare im wesentlichen parallel angeordneter Elektroden (2) paarweise unter einem vorbestimmten Winkel gegeneinander versetzt angeordnet sind.

7. Vorrichtung nach Anspruch 6, dadurch gekennzeichnet, daß die mindestens zwei Paare Elektroden mit jeweils einer ihrer Elektroden miteinander elektrisch verbunden sind.

8. Vorrichtung nach einem der Ansprüche 1 bis 7, dadurch gekennzeichnet, daß die Elektroden (2) aus unperforierten oder perforierten Platten, Streifen oder Geweben aus Metall oder leitfähigem Kunststoff bestehen.

9. Vorrichtung nach einem der Ansprüche 1 bis 8, dadurch gekennzeichnet, daß die Meßeinrichtung zur Messung des Leitwertes mit einer Auswerteeinrichtung zur Bestimmung der Feuchtigkeit verbunden ist, die Kalibrierwerte oder -kurven und/oder Referenzwerte und -kurven speichert und zur Bestimmung der Feuchtigkeit heranzieht.

10. Verfahren zur Bestimmung der lokalen Feuchtigkeit von Schüttgütern,
**dadurch gekennzeichnet**,

daß mindestens zwei Elektroden in das Schüttgut eingebracht werden, wobei der Zwischenraum zwischen den Elektroden mit dem Schüttgut aufgefüllt wird und daß anschließend der Leitwert zwischen den Elektroden (2) mit Schüttgut und hieraus die Feuchtigkeit des Schüttgutes an der Stelle der Elektroden bestimmt wird.

11. Verfahren nach Anspruch 10, dadurch gekennzeichnet, daß die gemessenen Leitwerte mit Werten einer von der durch das Schüttgut strömenden Flüssigkeit durchströmten Referenzzelle verglichen werden und die gemessenen Werte der Referenzzelle gegebenenfalls zur Nachkalibrierung herangezogen werden.

12. Verfahren nach Anspruch 10 oder 11, dadurch gekennzeichnet, daß die bestimmten Leitwerte mit vorab und verschiedenen Bedingungen des Schüttgutes bestimmten Referenzwerten verglichen werden.

13. Verfahren nach einem der Ansprüche 10 bis 12, dadurch gekennzeichnet, daß mehrere Elektrodenpaare in dem Schüttgut an unterschiedlichen Stellen eingebracht werden und die Feuchteverteilung gemessen wird.

14. Verfahren nach einem der Ansprüche 10 bis 13, dadurch gekennzeichnet, daß mehrere Elektrodenpaare unter zueinander verschiedenen Winkeln eingebracht und die Strömungsrichtung der Flüssigkeit abhängig von den gemessenen unterschiedlichen Leitwerten bestimmt wird.

Fig.1

Fig. 2

Meßzelle in Einbaulage (Beispiel)

Fig. 3

Fig.4

Fig.5

Strömungsrichtung

$$G_1 > G_2 \qquad \beta = f(G_1, G_2)$$

# Fig.6

Strömungsrichtung

$$G_1 = G_2$$

# Fig.7

Strömungsrichtung

6

5

1

5

6

β

$G_1 > G_2$     $\beta = f(G_1, G_2)$

EP 0 872 727 A1

| Europäisches Patentamt | EUROPÄISCHER RECHERCHENBERICHT | Nummer der Anmeldung EP 98 25 0134 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 40 23 552 A (KOTTWITZ MAX ANTON DIPL ING DI) 30.Januar 1992 * das ganze Dokument * | 1-6,10 | G01N27/04 |
| Y | | 8 | |
| Y | DATABASE WPI Section EI, Week 8652 Derwent Publications Ltd., London, GB; Class S03, AN 86-345453 XP002072727 & SU 1 229 667 A (MELIORAT SYSTEM AUT) * Zusammenfassung * | 8 | |
| A | DE 28 05 161 A (BOSCH GMBH ROBERT) 9.August 1979 * Zusammenfassung; Abbildung 3 * | 8 | |
| X | DE 40 01 406 A (HOFFMANN MANFRED) 27.September 1990 * Zusammenfassung; Anspruch 1 * | 1-5 | |
| X | EP 0 759 550 A (PROTIMETER PLC) 26.Februar 1997 * Anspruch 1 * | 1-3 | |

RECHERCHIERTE SACHGEBIETE (Int.Cl.6)

G01N

Der vorliegende Recherchenbericht wurde für alle Patentansprüche erstellt

| Recherchenort | Abschlußdatum der Recherche | Prüfer |
|---|---|---|
| BERLIN | 27.Juli 1998 | Brison, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

13